# EUROPÄISCHE PATENTSCHRIFT

(11) **EP 0 893 239 B1**
(45) Veröffentlichungstag und Bekanntmachung des Hinweises auf die Patenterteilung: **31.07.2002**
(21) Anmeldenummer: 98110450.8
(22) Anmeldetag: 08.06.1998
(51) Int. Cl.: B30B 11/08

(54) **Rundlauf-Tablettenpresse**
Rotary tabletting press
Presse pour comprimés à table tournante

(30) Priorität: 06.08.1997 DE 19733969; 23.07.1997 DE 19731514
(43) Veröffentlichungstag der Anmeldung: 27.01.1999
(73) Patentinhaber: KILIAN & Co. GmbH, D-50735 Köln (DE)
(72) Erfinder: König, Dietmar, 50937 Köln (DE)
(74) Vertreter: Hennicke, Ernst Rüdiger, Dipl.-Ing.

(56) Entgegenhaltungen:
- EP-A- 0 460 293
- US-A- 3 158 109
- US-A- 4 104 014
- PATENT ABSTRACTS OF JAPAN vol. 096, no. 007, 31. Juli 1996 & JP 08 071799 A (HATA TEKKOSHO:KK), 19. März 1996
- PATENT ABSTRACTS OF JAPAN vol. 010, no. 333 (M-534), 12. November 1986 & JP 61 137700 A (TOHOKU METAL IND LTD), 25. Juni 1986

## Beschreibung

Die Erfindung betrifft eine Rundlauf-Tablettenpresse mit einem rotierenden Matrizentisch und Ober- und Unterstempeln, die koaxial zu den Matrizen in Stempelführungen hubbeweglich sind, wobei wenigstens die Unterstempel zur Ausführung ihres Hubes und Rückhubes kurvengesteuert und zur Verhinderung einer Übersteuerung ihrer Hub- bzw. Rückhubbewegung von einem Dämpfungselement beaufschlagt sind. Eine Rundlauf- Tablettenpresse gemäß dem Oberbegriff des unabhängigen Anspruchs 1 ist aus der Druckschrift JP-A-08 071 799 bereits bekannt.

Beim Pressen von Tabletten in Rundlauf-Tablettenpressen wird das Gewicht der herzustellenden Tabletten von dem Füllvolumen des in die Matrizen eingebrachten, zu verpressenden Pulvers bestimmt. Es ist daher wichtig, daß die unten von den Unterstempeln verschlossenen Matrizen vor dem Pressen immer dasselbe Pulvervolumen aufnehmen. Die Unterstempel, die bei einem Umlauf des rotierenden Matrizentisches von mehreren Steuerkurven angehoben und abgesenkt werden, erfahren bei diesen Vertikalbewegungen große Beschleunigungskräfte. Da es fertigungstechnisch bislang praktisch nicht möglich ist, ein spielfreies Zusammenwirken von Stempeln und Steuerkurven zu erreichen, ist es erforderlich, den Stempeln ein Dämpfungselement zuzuordnen, um eine Übersteuerung von deren Hubbewegung, das heißt ein Abheben des Stempels von der Steuerkurve zu vermeiden, was sonst zu Ungenauigkeiten beim Befüllungsgrad und damit beim Gewicht der zu pressenden Tabletten führen würde.

Als Dämpfungselement sind in der Vergangenheit sogenannte Bremsstifte zur Anwendung gekommen, die in einer in die Stempelführung einmündenden Querbohrung eingesteckt und von einer Druckteder über eine einstellbare Andruckplatte gegen den jeweiligen Stempel gedrückt werden und so auf den Stempel eine quer zur Bewegungsrichtung gerichtete Kraft ausüben, wodurch die Reibungskraft zwischen Stempelführung und darin beweglichem Stempel vergrößert wird. In ähnlicher Weise ist es auch möglich, jedem Stempel ein als genormtes Standardbauteil erhältliches Federdruckstück zuzuordnen, wie sie bei Schnapp-Arretierungen häufig Verwendung finden. Das Federdruckstück wird dann ebenfalls in einer in die Stempelführung einmündenden Querbohrung angeordnet und drückt mit einem federbelasteten Andruckkopf quer zur Bewegungsrichtung gegen den Stempel, so daß dieser infolge der daraus resultierenden Reibkraft bei seiner vertikalen Bewegung eine Dämpfung erfährt.

Diese bekannten Lösungen haben den Nachteil, daß es sehr schwierig ist, die Vorspannung der Feder und damit die auf den Stempel ausgeübte Querkraft exakt einzustellen, um einerseits das Übersteuern des Stempels bei seiner Hubbewegung zuverlässig zu vermeiden, andererseits die Reibkräfte zwischen Stempelführung und Stempelschaft so gering wie möglich zu halten, um unnötigen Verschleiß zu vermeiden. Die Einstellung der Federspannung, die üblicherweise mittels einer Schraube durchgeführt wird, bleibt infolge der Maschinenvibration selten lange erhalten, so daß es schon nach vergleichsweise kurzen Maschinenlaufzeiten erforderlich werden kann, diese mechanischen Dämpfungselemente neu zu justieren. Insbesondere bei großen Tablettenpressen, die nicht selten mehr als 50 Matrizen und eine entsprechende Anzahl Unterstempel aufweisen, ist die Justierung von sovielen Dämpfungselementen sehr zeitaufwendig. Darüber hinaus haben diese Dämpfungselemente den besonderen Nachteil, daß sie zur Demontage der Stempel meist vollständig entfernt werden müssen, da es sonst dazu kommen kann, das der gegen den Stempel drückende Bremsstift beim Herausziehen des Stempels aus der Stempelführung in eine am Stempel befindliche Hinterschneidung eingreift und den vollständigen Ausbau somit unmöglich macht.

Um den Zeitaufwand zu verringern, der für die Demontage, den Einbau und das Einstellen der großen Anzahl der beschriebenen Dämpfungselemente erforderlich ist, ist auch bereits vorgeschlagen worden, am Matrizentisch umfangsseitig im Bereich der Stempelführungen für die Unterstempel eine umlaufende Nut vorzusehen, wobei die Stempel ein kleines Stück über den Nutgrund seitlich vorspringen. In die Nut ist als Dämpfungselement ein spannbares Bremsband eingelegt, das mittels einer einfachen Spannschelle befestigt oder gelöst werden kann und das im montierten Zustand mit seiner inneren Umfangsfläche gegen die Stempel drückt und so eine Dämpfung von deren Bewegung erreichen soll. Diese Ausführung hat zwar den Vorteil, daß sie zum Ausbau der Stempel schnell entfernt und nach deren Einbau wieder schnell montiert werden kann; jedoch ist damit nicht sichergestellt, daß auf jeden Stempel die erforderliche, möglichst gleichgroße Reibbzw. Dämpfungskraft ausgeübt wird.

Aufgabe der Erfindung ist es, eine Rundlauf-Tablettenpresse der eingangs genannten Art mit einer Dämpfung für die kurvengesteuerten Stempel zu versehen, die verschleiß- und wartungsfrei ist und dennoch eine weitgehend gleichbleibende Dämpfung aller Stempel gewährleistet. Diese Aufgabe wird durch eine Rundlauf- Tablettenpresse gemäß dem Gegenstand des unabhängigen Anspruchs 1 gelöst.

Erfindungsgemäß wird bei dieser Ausführungsform also die auf die einzelnen Stempel einwirkende, die Reibung in der Stempelführung vergrößernde Querkraft nicht mehr mechanisch unter Berührung der Stempel infolge einer Feder- oder Vorspannkraft ausgeübt, sondern mit Hilfe eines Magneten, der den Stempel gegen die Stempelführungswandung zieht und so eine Dämpfung der Stempelbewegung infolge erhöhter Reibkraft bewirkt. Die auf die einzelnen Stempel dabei ausgeübten Magnetkräfte ändern sich auch nach langen Maschinenlaufzeiten und starken Maschinenvibrationen nicht, da die vom Magneten auf dem Stempel ausgeübten Kräfte ausschließlich von der Magnetstärke und dem zwischen Magnet und Stempel befindlichen Spalt abhängen und sich diese Größen beim Betrieb der Maschine praktisch nicht verändern. Beim Ein- und Ausbau eines Stempels muß das zugehörige Magnetelement nicht entfernt werden, da es nicht in die Stempelführung hineinragt und somit auch die Montage oder Demontage nicht behindern kann.

Jedem Unterstempel ist ein eigenes Magnetelement zugeordnet, das in einer in die Stempelführung einmündenden Querbohrung am Matrizentisch angeordnet ist.

In bevorzugter Ausgestaltung der Erfindung besteht das Magnetelement im wesentlichen aus einem Dauermagneten. Derartige Magnete sind auch mit hohen Magnetkräften, die leicht im Bereich von 50 bis 500 Newton liegen können, als Standardbauteile preiswert erhältlich.

Das bzw. die Magnetelement(e) kann/können so angeordnet sein, daß zwischen Magnet und dem Stempel, auf den es einwirkt, ein Spalt verbleibt. Dies ist besonders dann zweckmäßig, wenn das Magnetelement erst dann in die Queröffnung im Matrizentisch eingesetzt wird, nachdem die Stempelführung mit hoher Genauigkeit gefertigt wurde. Es ist selbstverständlich auch möglich, beim Herstellen des Matrizentisches erst die Queröffnung(en) an dessen Umfangsseite herzustellen und den Magnet darin einzusetzen und dann die Stempelführung(en) zu bohren, wobei ein Teil des Magnetelements bzw. der Magnetelemente mit ausgebohrt wird, die somit eine Fläche ohne Übergang mit der Stempelführung bilden. Bei dieser Vorgehensweise ist das Magnetelement mit seinem zum Stempel weisenden Vorderende also an die Umfangsfläche des Stempels genau angepasst, wodurch eine besonders große Kraft auf den Stempel einwirken kann.

Das Magnetelement bzw. die Magnetelemente können einen Elektromagneten aufweisen bzw. aus einem Elektromagneten bestehen. Wenn das bzw. die Magnetelement(e) aus einem Elektromagneten bestehen, kann die auf die Stempel ausgeübte Kraft durch Veränderung des Stroms vergrößert oder verringert werden bzw. bei Abschalten des oder der Magnete die Dämpfungskraft vollständig aufgehoben werden. Es ist auch möglich, eine Kombination von Dauermagneten und Elektromagneten zur Einstellung der Magnetkraft vorzusehen, wobei die Elektromagnete dem von den Dauermagneten erzeugten magnetischen Feld ein Streufeld überlagern und so die magnetische Feldstärke vergrößern oder verringern können.

Insbesondere, wenn das Magnetelement erst nachträglich in einen bereits mit fertigen Stempelführungen versehenen Matrizentisch eingesetzt werden soll, beispielsweise bei der Nachrüstung von Maschinen, die bisher mit mechanischen Andruckmitteln versehen waren, ist dieses zweckmäßig an seinem vom Stempel abgewandten, hinteren Ende mit einem vorspringenden Anschlagbund versehen. Damit wird sichergestellt, daß der Magnet nicht zu tief in die Querbohrung am Matrizentisch eingesteckt wird und dadurch in die Stempelführung hineinragt. Zweckmäßig ist das Magnetelement in der dazugehörigen Queröffnung im Matrizentisch lösbar befestigt, wodurch es leicht gegen einen anderen Magneten ausgetauscht werden kann, beispielsweise wenn ein Magnet mit größerer oder geringerer Magnetkraft eingebaut werden soll.

Weitere Merkmale und Vorteile der Erfindung ergeben sich aus der nachfolgenden Beschreibung und den Zeichnungen, worin eine bevorzugte Ausführungsform der Erfindung an einem Beispiel näher erläutert ist. Es zeigt:

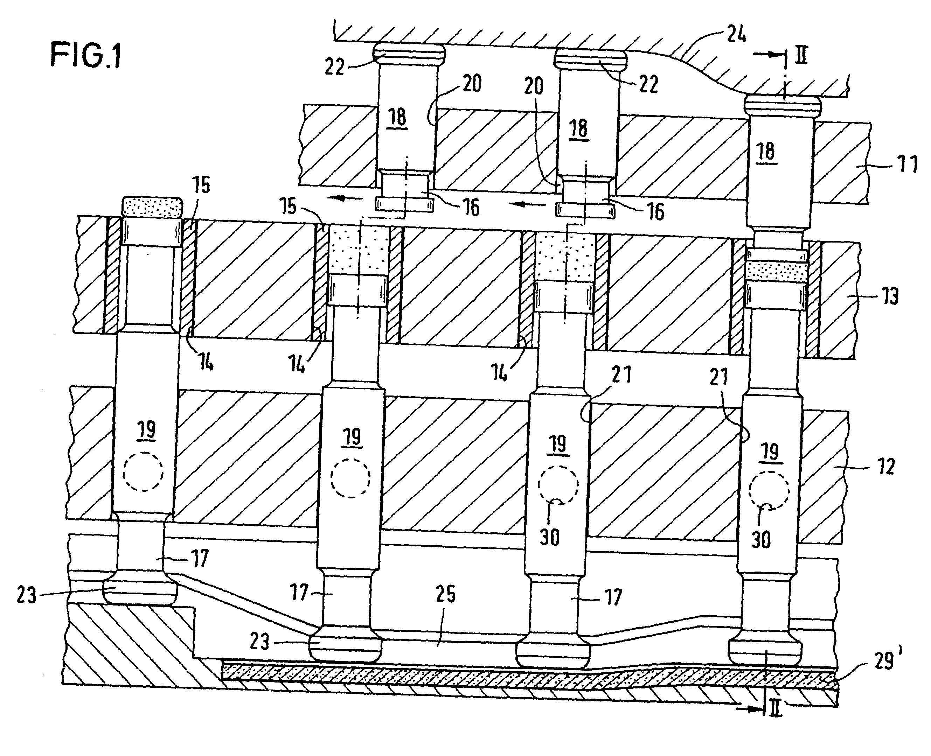

Fig. 1 einen Ausschnitt einer Abwicklung eines Matrizentisches für eine Rundlauf-Tablettenpresse im Bereich des durch die Matrizen verlaufenden Teilkreises;
Fig. 2 einen Teilbereich des Matrizentisches im Bereich eines Unterstempels in einem Schnitt längs der Linie II-II nach Fig. 1; und
Fig. 3 den Gegenstand der Fig. 2 in einem Schnitt längs der Linie III-III.

In der Zeichnung bezeichnet 10 einen Matrizentisch einer Rundlauf-Tablettenpresse, der mit einer nicht dargestellten Hauptwelle horizontal umläuft und einen oberen Stempelführungsring 11 und einen unteren Stempelführungsring 12 aufweist, die drehfest miteinander verbunden sind. Der untere Stempelführungsring 12 trägt an seinem oberen Rand den Matrizenteller 13, in dem die Matrizenbohrungen 14 im Kreis angeordnet sind, in denen die Matrizen 15 sitzen. Koaxial zu den Matrizen 15 sind im Matrizentisch im oberen Stempelführungsring 11 Oberstempel 16 und im unteren Stempelführungsring 12 Unterstempel 17 angeordnet, deren Stempelschäfte 18 bzw. 19 in Stempelführungen 20 bzw. 21 gleitend auf- und abbeweglich geführt sind.

Jeder Matrize 15 ist jeweils ein Oberstempel 16 und ein Unterstempel 17 zugeordnet, deren Kopfenden 22 bzw. Fußenden 23 in Gleitschienen 24 bzw. 25 gleiten, die als Steuerkurven die Aufund Abbewegung der Stempel 16 und 17 beim Rundlauf der Presse steuern.

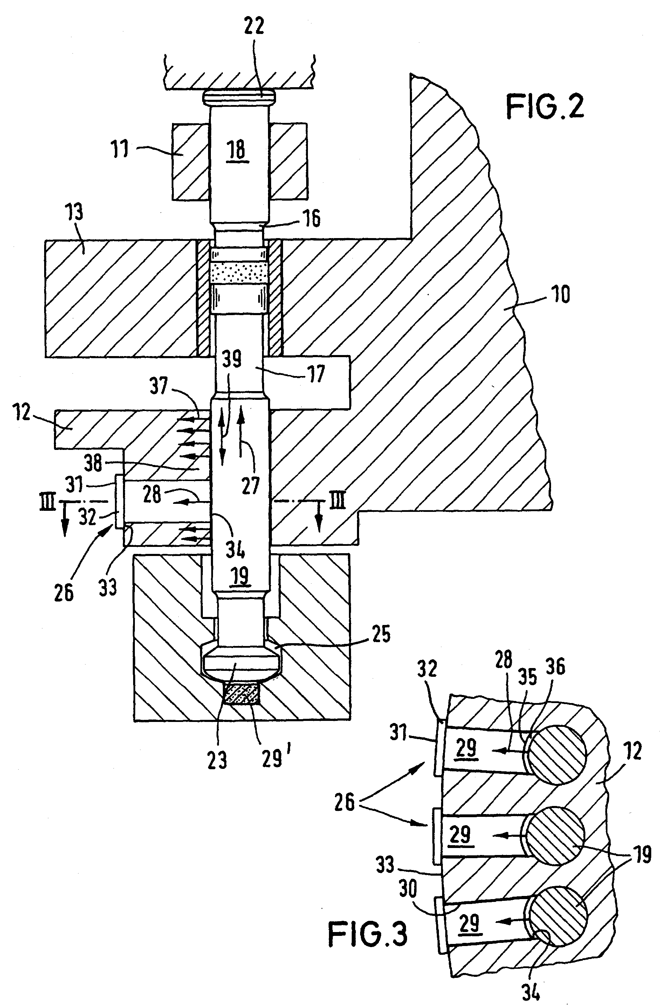

Infolge der hohen Drehgeschwindigkeiten des Matrizentisches sind die Stempel 16 und 17 beim Entlangfahren an ihren die Hubbewegung steuernden Gleitschienen 24 und 25 erheblichen Beschleunigungen in Vertikalrichtung ausgesetzt. Insbesondere bei den Unterstempeln 17 muß trotz dieser hohen Beschleunigungskräfte zuverlässig vermieden werden, daß sich die Stempel von ihren Steu-erkurven abheben, da sich sonst kein konstanter Befüllungsgrad der Matrizen 15 mit Tablettenpulver einstellen könnte und dadurch die geforderte Gewichtskonstanz nicht erreicht würde. Da die als Steuerkurven dienenden Gleitschienen 25 nicht so exakt gefertigt werden können, daß sie eine spielfreie Führung der Unterstempel gewährleisten, ist jeder Unterstempel 17 mit einem Dämpfungselement 26 versehen, das auf den Stempel eine quer zu dessen Bewegungsrichtung 27 wirkende Querkraft 28 ausübt, infolge deren der Stempel in der Stempelführung gegen diese gezogen wird, was eine zusätzliche Reibkraft zwischen Stempel und Stempelführung bewirkt. Diese Reibkraft reicht aus, ein Übersteuern des Unterstempels, das heißt ein Abheben von der jeweiligen Steuerkurve 25 zu vermeiden. Wie sich aus den Fig. 2 und 3 ergibt, bestehen die einzelnen Dämpfungselemente 26 aus Permanentmagneten 29 mit rundem Querschnitt, die in umfangsseitig am Matrizentisch 10 angeordnete, bis zu den Stempelführungen 21 reichende Querbohrungen 30 eingesteckt sind. An ihrem hinteren Ende 31 sind die Magneten 29 mit einem vorspringenden Anschlagbund 32 versehen, der an der Umfangsfläche 33 des unteren Stempelführungsrings 12 anschlägt und so sicherstellt, daß der Magnet nicht zu tief in die jeweilige Querbohrung 30 eingesteckt werden kann. An seinem vorderen Ende 34 ist jeder Magnet mit einem konkaven Einschnitt 35 versehen, dessen Krümmungsradius dem halben Durchmesser eines Unterstempels 17 entspricht, so daß der Magnet an die Umfangsfläche des Stempels angepasst ist und sich zwischen diesem und dem Magneten ein gleichmäßig schmaler Spalt 36 ausbildet.

Wie sich aus Fig. 2 ergibt, übt jeder Permanentmagnet 29 auf den ihm zugeordneten Unterstempel 17 eine radial nach außen wirkende Querkraft 28 aus, die zur Folge hat, daß sich der Stempel mit dem radial nach außen weisenden Teil seiner Umfangsfläche 33 mit einer Flächenpressung 37 gegen den äußeren Bereich 38 der Stempelführung 21 anliegt. Die daraus resultierende, auf den Stempel in dessen Bewegungsrichtung 27 wirkende Reibungskraft 39 wirkt dämpfend auf die Bewegungen des Stempels und verhindert zuverlässig, daß sich dieser beim Umlauf des Matrizentisches von den Steuerkurven 25 abhebt.

Die Permanentmagnete als krafterzeugende Dämpfungselemente behalten ihre Magnetkraft praktisch unbegrenzt und sind somit verschleiß- und wartungsfrei. Zur Sicherung in der Querbohrung 30 können sie daher problemlos auf Dauer eingeklebt werden. Es ist allerdings auch denkbar, andere geeignete Sicherungsmittel zum Befestigen der Magnete vorzusehen, wenn diese gegebenenfalls gegen andere Magnete mit einer größeren oder geringeren Magnetkraft ausgetauscht werden sollen. Denkbar wäre hier beispielsweise, die Magnete mit einem Außengewinde zu versehen und sie in die mit Innengewinde ausgestatteten Querbohrungen einzuschrauben, wobei sie zweckmäßig an ihrem vorderen Ende 34 nicht konkav ausgestaltet, sondern mit einer ebenen Fläche versehen sind.

Die Erfindung ist nicht auf das dargestellte und beschriebene Ausführungsbeispiel beschränkt, sondern es ergeben sich eine Vielzahl von Abwandlungen und Änderungen, ohne den Rahmen zu verlassen. So ist es beispielsweise möglich, an der unteren Stempelführung ein Magnetelement 29' vorzusehen, das unterhalb der Fußenden 23 der Unterstempel 17 angeordnet ist und die Unterstempel bei ihrem Umlauf mit dem Matrizentisch immer fest gegen die untere Steuerkurve zieht. Auch dadurch kann leicht sichergestellt werden, daß die Unterstempel sich nicht von den Steuerkurven abheben, was Ungenauigkeiten beim Gewicht der herzustellenden Tabletten zur Folge hätte.

Anstelle der Dauermagnete können auch Elektromagnete verwendet werden, deren auf die Stempel ausgeübte Kraft leicht durch Veränderung des durch die Magnetspule fließenden Stroms vergrößert oder verringert werden kann. Dadurch ist es leicht möglich, die auf den Stempel einwirkende Reibungskraft und damit den Dämpfungsgrad zu verändern.

## Patentansprüche

1. Rundlauf-Tablettenpresse mit einem rotierenden Matrizentisch und hubbeweglich angeordneten Ober- und Unterstempeln (16, 17), wobei wenigstens die Unterstempel (17) zur Ausführung ihres Hubes und Rückhubes kurvengesteuert und zur Verhinderung einer Übersteuerung ihrer Hub- bzw. Rückhubbewegung von einem Dämpfungselement (26) beaufschlagt sind, das aus mindestens einem auf die Unterstempel (17) wirkenden Magnet-element (29, 29') besteht, **dadurch gekennzeichnet, daß** die Ober- und Unterstempel koaxial zu den Matrizen in Stempelführungen (20, 21) hubbeweglich angeordnet sind und daß jedem Unterstempel (17) ein eigenes Magnetelement (29) zugeordnet ist, das in einer bis zur Stempelführung (21) reichenden Queröffnung (30) im Matrizentisch (10) angeordnet ist und quer zur Bewegungsrichtung (27) des zugehörigen Unterstempels (17) auf diesen einwirkt.

2. Presse nach Anspruch 1, **dadurch gekennzeichnet, daß** das Magnetelement (29) im wesentlichen aus einem Permanentmagneten besteht.

3. Presse nach Anspruch 1 oder 2, **gekennzeichnet durch** einen Spalt (36) zwischen dem Stempel (17) und dem auf dieses einwirkenden Magnetelement (29).

4. Presse nach einem der Ansprüche 1 bis 3, **dadurch gekennzeichnet, d a ß** das Magnetelement (29) mit seinem zum Unterstempel (17) weisenden Vorderende (34) an die Umfangsflächen (33) des Unterstempels (17) angepaßt ist.

5. Presse nach einem der Ansprüche 1 bis 4, **dadurch gekennzeichnet, d a ß** das Magnetelement (29) mindestens einen Elektromagneten aufweist.

6. Presse nach einem der Ansprüche 1 bis 5, **dadurch gekennzeichnet, d a ß** das Magnetelement (29) an seinem vom Unterstempel (17) abgewandten Ende (31) mit einem vorspringenden Anschlagbund (32) versehen ist.

7. Presse nach einem der Ansprüche 1 bis 6, **dadurch gekennzeichnet, d a ß** das Magnetelement (29) in der zugehörigen Queröffnung (30) im Matrizentisch (10) lösbar befestigt ist.

## Claims

1. Rotary tablet press having a rotating mould table and reciprocally arranged top and bottom plungers (16, 17), whereby at least the bottom plungers (17) are cam-controlled for carrying out their stroke and their return stroke, and are acted upon by a damping element (26) for preventing an overshoot of their stroke or their return stroke movement, **characterised in that** the top and the bottom plungers are arranged in plunger guides (20, 21) in a reciprocal manner coaxial to the moulds, and that each bottom plunger (17) has its own magnetic element (29) assigned thereto, which is arranged in a transverse opening (30) extending to the plunger guide (21) in the mould table (10) and which acts thereon transverse to the direction of movement (27) of the corresponding bottom plunger (17).

2. Press according to claim 1, **characterised in that** the magnetic element (29) essentially consists of a permanent magnet.

3. Press according to claim 1 or 2, **characterised by** a gap (36) between the plunger (17) and the magnetic element (29) acting thereon.

4. Press according to one of claims 1 to 3, **characterised in that** the magnetic element (29) is adapted to the peripheral faces (33) of the bottom plunger (17) with its front end (34) facing the bottom plunger (17).

5. Press according to one of claims 1 to 4, **characterised in that** the magnetic element (29) comprises at least one electromagnet.

6. Press according to one of claims 1 to 5, **characterised in that** the magnetic element (29) is provided with a projecting stop collar (32) at the end (31) remote from the bottom plunger (17).

7. Press according to one of claims 1 to 6, **characterised in that** the magnetic element (29) is mounted in a releasable manner in the corresponding transverse opening (30) in the mould table (10).

## Revendications

1. Presse rotative pour comprimés comportant une table à matrices rotative et des pistons supérieurs et inférieurs (16, 17) montés de manière déplaçable en soulèvement, au moins les pistons inférieurs (17) étant commandés par des cames pour exécuter leurs courses aller et retour, et étant sollicités, pour empêcher une surcommande de leur mouvement de course aller ou course retour, par un élément d'amortissement (26) qui est constitué d'au moins un élément magnétique (29, 29') agissant sur le piston inférieur (17), **caractérisée en ce que** les pistons supérieurs et inférieurs sont montés déplaçables, coaxialement aux matrices, dans des guides de piston (20, 21) et **en ce qu'**à chaque piston inférieur (17) est associé son propre élément magnétique (29) qui est disposé dans une ouverture transversale (30), s'étendant jusqu'au guide de piston (21) dans la table à matrices (10), et qui agit sur le piston inférieur (17) correspondant, transversalement à la direction de déplacement (27) de celui-ci.

2. Presse selon la revendication 1, **caractérisée en ce que** l'élément magnétique (29) est essentiellement constitué d'un aimant permanent.

3. Presse selon la revendication 1 ou 2, **caractérisée par** un interstice (36) entre le piston (17) et l'élément magnétique (29) agissant sur celui-ci.

4. Presse selon l'une des revendications 1 à 3, **caractérisée en ce que** l'élément magnétique (29) est adapté, par son extrémité avant (34) dirigée vers le piston inférieur (17), aux surfaces périphériques (33) du piston inférieur (17).

5. Presse selon l'une des revendications 1 à 4, **caractérisée en ce que** l'élément magnétique (29) comporte au moins un électro-aimant.

6. Presse selon l'une des revendications 1 à 5, **caractérisée en ce que** l'élément magnétique (29) est pourvu, à son extrémité (31) tournée à l'opposé du piston inférieur (17), d'un épaulement de butée (32) en saillie.

7. Presse selon l'une des revendications 1 à 6, **caractérisée en ce que** l'élément magnétique (29) est fixé, de manière non permanente, dans l'ouverture transversale (30) correspondante de la table à matrices (10).
